(19) Europäisches Patentamt
European Patent Office
Office européen des brevets

(11) **EP 4 613 515 A1**

(12) **EUROPEAN PATENT APPLICATION**

(43) Date of publication:
**10.09.2025 Bulletin 2025/37**

(51) International Patent Classification (IPC):
**B60H 1/00** *(2006.01)* **B60H 1/32** *(2006.01)*
**F16K 11/00** *(2006.01)*

(21) Application number: **24161220.9**

(22) Date of filing: **04.03.2024**

(52) Cooperative Patent Classification (CPC):
**F16K 11/0856; B60H 1/00478; B60H 1/3229;**
B05B 1/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ARRK Engineering GmbH**
**70563 Stuttgart (DE)**

(72) Inventors:
• **Schäfer, Daniel**
**70563 Stuttgart (DE)**
• **Schwichtenberg, Maik**
**70563 Stuttgart (DE)**

(74) Representative: **Fleuchaus & Gallo Partnerschaft
mbB**
**Steinerstraße 15/A**
**81369 München (DE)**

(54) **FLUID DISTRIBUTION DEVICE**

(57) A Device (1000) for distributing a fluid (300) from a fluid inlet (101) to a set (k) of fluid outlets (201-k), the device (1000) comprising a chamber, wherein an outer surface of the chamber (100) comprises a cylindrical surface section (110) of the chamber (100) an enclosure (200) surrounding the chamber (100), wherein an inner surface of the enclosure (200) comprises a cylindrical surface section (210) of the enclosure (200) and wherein the cylindrical surface sections (110, 120) share a common cylinder axis (350), and the cylindrical surface sections (110, 210) are arranged adjacent to one another. The cylindrical surface section (110) has at least one exit opening (120) adapted to allow the fluid (300) to exit from the chamber (100) and the cylindrical surface section (210) has at least two transmission openings (220-k) adapted to allow the fluid (300) to be routed to corresponding fluid outlets (201-k) in fluid communication with the transmission openings (220-k). The chamber (100) and the enclosure (200) are adapted to allow a change of the relative angular position (ω) of the cylindrical surface section (110) vs. the cylindrical surface section (210) by rotation of at least the portion of chamber (100) comprising the cylindrical surface section (110) and/or at least the portion of enclosure (200) comprising the cylindrical surface section (210) about the common cylinder axis (350), so that, for a first predetermined relative angular position (ω1), the exit opening (120) at least partially overlaps with a first subset of the transmission openings (220-k), thereby routing the flow of fluid (300) towards the first subset of the fluid outlets (201-k) in fluid communication with the respective transmission openings (220-k), and for a second predetermined relative angular position (ω2), the exit opening (120) at least partially overlaps with a second subset of the transmission openings (220-k), thereby routing the flow of fluid (300) towards the second subset of the fluid outlets (201-k) in fluid communication with the respective transmission openings (220-k).

FIG. 2

**Description**

**Technical Field**

The disclosure relates to the distribution of fluids in general, and more particularly, to a device for distributing a fluid from a fluid inlet to a number of fluid outlets.

**Background**

Air conditioning devices usually provide a flow of air within a certain pre-defined temperature and humidity range. The devices are often equipped to distribute the air to different locations. While distributing the air equally and constantly to all locations connected to the fluid distribution device is possible, it is frequently desired to deliver individual amounts of air to the different locations at different times.

For example, air conditioning systems for buildings can distribute the air to different rooms depending on the occupancy of the room. Supplying conditioned air to an empty room can be regarded as wasting energy.

The same principle applies to road vehicles (amongst them cars and busses). The air often requires distribution to different sections of the car (front, rear, windows, left or right etc.) depending on the environmental conditions and occupancy. Compared to buildings, the change frequency of the air flow to be switched between different locations may be higher. For example, most of the available air could be diverted to the windscreen, for a couple of minutes only, for the purpose of de-frosting or de-fogging, following which the air should be distributed to the passengers, e.g. in a layered manner (that is, different amounts to the feet, torso, and head layers).

Flow control devices such as valves or flaps that are actuated by electro-mechanical actuators which could, for example, be controlled by controllers inside or outside the air-conditioning device may present an adequate solution. In simple words, the air-conditioning device is part of a control loop with sensors to measure actual conditions (such as, for example, air temperature in various layers, frozen of foggy windows, etc.) and the controller receiving the sensor information and actuating the electro-mechanical actuators of the valves or flaps to supply warm or cold air to the respective sections of the sensors to achieve pre-set conditions.

However, in particular, in road vehicles, air-condition systems working in this way have reached a high degree of complexity and, due to space constraints, a very high degree of integration, both of which can render them prone to failure. A failure of a single valve or flap, or sensor or electro-mechanical actuator may cause non-desired effects, such as overheating or excessive cooling, which could even represent health hazards, and may thus trigger the repair or even replacement of the complete device. Because air-conditioning devices are often deployed in inaccessible spaces and thus difficult to service, this may represent a major cost and nuisance.

While vehicle air-conditioning equipment is a prominent example, there are other devices for fluid distribution, such as, other liquids and gases, that may also require a flexible distribution to individual sections of a space, such as, for example, in the cooling of a complex device inside an enclosure, or the likes. Failure of the fluid distribution in such a complex device may lead to catastrophic failure and substantial damage.

Accordingly, there is a need for an improved fluid distribution device that provides sufficient flexibility in the fluid distribution pattern as well as improved resistance to failure.

**Summary**

The invention provides a device having the features of claim 1; preferred embodiments are the subject matter of the dependent claims 2 to 16.

Accordingly, a device of the invention, for distributing a fluid from a fluid inlet to a set of fluid outlets comprises a chamber that is adapted to allow the fluid to enter the chamber from the fluid inlet, wherein an outer surface of the chamber comprises a cylindrical surface section of the chamber, and an enclosure surrounding the chamber, wherein an inner surface of the enclosure comprises a cylindrical surface section of the enclosure, and wherein the cylindrical surface sections of the chamber and the enclosure share a common cylinder axis, and the cylindrical surface sections of the chamber and the enclosure are arranged adjacent to one another.

The cylindrical surface section of the chamber has at least one exit opening adapted to allow the fluid to exit from the chamber, and the cylindrical surface section of the enclosure has at least two transmission openings adapted to allow the fluid to be routed to corresponding fluid outlets in fluid communication with the transmission openings.

According to the invention, the chamber and the enclosure are adapted to allow a change of the relative angular position of the cylindrical surface section of the chamber vs. the cylindrical surface section of the enclosure by rotation of at least the portion of chamber comprising the cylindrical surface section of the chamber and/or at least the portion of enclosure comprising the cylindrical surface section of the enclosure about the common cylinder axis, so that, for a first predetermined relative angular position, the exit opening at least partially overlaps with a first subset of the transmission openings, thereby routing the flow of fluid towards the first subset of the fluid outlets in fluid communication with the respective transmission openings, and for a second predetermined relative angular position, the exit opening at least partially overlaps with a second subset of the transmission openings, thereby routing the flow of fluid towards the second subset of the fluid outlets in fluid communication with the respective transmission openings.

The invention avoids the use of multiple valves or flaps; the function of multiple valves or flaps to control fluid flow into numerous zones is conflated into a single device which comprises two at least partly cylindrical bodies - the (inner) chamber and the (outer) enclosure. Openings or holes in these bodies allow routing of an influx fluid flow towards one or multiple outlets which are in a fluid communication with the transmission openings and thus distributing the fluid flow amongst multiple fluid outlets.

In the device of the invention, fluid can flow towards an outlet if an opening in the chamber, i.e. an exit opening, overlaps at least in part with an opening in the surrounding enclosure, i.e. a transmission opening. Accordingly, the device may be controlled by a single drive-and control signal-because a single parameter, namely, the relative angular position between both cylindrical bodies, i.e. their rotational position about a common rotation axis can be adjusted as needed so as to have the exit opening(s) overlap with different subsets of the transmission openings according to a predetermined encoding pattern representing the desired flow distribution.

The number of possible outlet permutations depends on the number of available transmission openings, and the size and/or cross-section(s) of the exit opening(s) and the transmission opening(s) relative to the available surface area along the cylindrical surface sections(s) in terms of its peripheral circumference as well as its axial length.

In an embodiment, the cylindrical surface section of the chamber comprises a plurality of exit openings, wherein the exit openings can be arranged both along the axis of the cylinder, i.e. in a direction substantially parallel to the common cylinder axis, and/or along a circumferential direction along the cylindrical surface section of the chamber, wherein said circumference is substantially normal relative to the common cylinder axis.

Similarly, in another embodiment, the cylindrical surface section of the enclosure comprises the plurality of transmission openings, wherein the transmission openings can, likewise, be arranged both along the axis of the cylinder, i.e. in a direction substantially parallel to the common cylinder axis, and/or along a circumferential direction along the cylindrical surface section of the enclosure, wherein said circumference is substantially normal relative to the common cylinder axis.

The distribution of a plurality of exit openings and transmission openings over the cylindrical surface sections of both the chamber and the enclosure allows for the encoding of a multitude of distribution schemes at only little space consumption which would otherwise only be possible, if at all, using mechanically very complex and highly integrated fluid distribution devices which are prone to error and expensive to manufacture.

In an embodiment of the invention, the chamber and the enclosure are adapted to prevent the fluid from passing through other than the at least partially overlapping exit opening(s) and/or transmission openings of the cylindrical surface sections of the chamber or the enclosure, respectively. This excludes an efflux of any relevant amounts of fluid fed to the device through the fluid inlet other than though the fluid outlets that are in fluid communication with the transmission openings. In particular, in this embodiment, the device of the invention does not include a non-switchable outlet-other than the fluid outlets of the device of the invention, which can be considered switchable-in an area that is not part of the cylindrical surface sections, such as, for example, the cylinder end faces.

In an embodiment of the invention, at least one of the transmission openings or one of the exit openings has a cross-section shaped to overlap with a plurality of exit openings or transmission openings, respectively, at a given relative angular position of the cylindrical surface section of the chamber vs. the cylindrical surface section of the enclosure. This enables an additional set of encoding options in which not only one of the transmission openings is supplied with fluid in the given relative angular position but multiple of them at the same time.

In an embodiment, the fluid outlets comprise connectors and/or attached pipes or ducts to guide the fluid to various sections of a vehicle or a static space, such as a room or a building.

In an embodiment of the invention, the relative angular position of the cylindrical surface section of the chamber vs. the cylindrical surface section of the enclosure is changed by rotation of the chamber vs. the enclosure, such as, by an actuator or drive.

The drive may be coupled to the chamber in numerous ways that allow a rotation of the cylindrical surface section of the chamber relative to the cylindrical surface section of the enclosure. For example, the drive may be coupled directly to the chamber end face, such as, by way of an axle coupled to the chamber and/or using a gear arrangement. The drive may be coupled to the chamber at a point substantially on the common cylinder axis, or on an axis parallel hereto.

Alternatively, the drive may also be arranged at an angle relative to the common cylinder axis and a gear or clutch arrangement used to transpose any rotational driving force of the drive to a rotation of the chamber. For example, the drive may also be coupled to the chamber at a portion of its cylindrical surface section and thus potentially reducing the driving force necessary to effect rotation of the chamber vs. the enclosure.

In an embodiment, the drive may be a motor or a stepper motor; alternatives include a hydraulic or pneumatic actuator.

In an embodiment of the invention, the drive is configured to receive control signals actuating the drive in such a way that a predetermined relative angular position of the cylindrical surface section of the chamber vs. the cylindrical surface section of the enclosure can be set. Preferably, in such an embodiment, the control signals are received by an input receiving input from an output of a control device programmed to perform a mapping between a desired flow of fluid towards at least one of the fluid outlets and a corresponding relative angular position of the cylindrical surface section of the chamber vs. the cylindrical surface section of the enclosure.

In such an arrangement, the control device would advantageously be programmed to be able to map each desired flow distribution scheme which may be of relevance for the relevant use case to a defined relative angular position of the cylindrical surface section of the chamber vs. the cylindrical surface section of the enclosure for and output a control signal to the drive instructing the drive to rotate the chamber vs. the enclosure in such was as to place them in the respective defined relative angular position of the cylindrical surface section of the chamber vs. the cylindrical surface section of the enclosure.

For example, in the case of an application of a device of the invention in a vehicle, the control device may be programmed to determine defined angular positions of the cylindrical surface section of the chamber vs. the cylindrical surface section of the enclosure for flow distributions implementing a de-frosting or de-fogging function, a passenger cell temperature layering, a front/rear distribution, etc.

In a further embodiment of the invention, the device comprises at least one sensor allowing to determine the relative angular position of the cylindrical surface section of the chamber vs. the cylindrical surface section of the enclosure. Preferably, the relative angular position of the cylindrical surface section of the chamber vs. the cylindrical surface section of the enclosure determined by the sensor encoded in an output signal which, in turn, is fed to the drive and/or the control device and thus working as a feedback signal to enable the control device or the drive, respectively, to place the cylindrical surface section of the chamber into the exact desired relative angular position relative to the cylindrical surface section of the enclosure. This may also be applied for calibration of the control device in outputting control signals to the drive and/or the drive itself and/or for re-adjusting the positioning mechanism in the course of time during which mechanical deviations in the exact positioning may be caused by wear and tear.

In an embodiment, the the fluid inlet of the device is arranged at a surface of the enclosure that is not part of a cylindrical surface section of the enclosure, such as, a cylinder end face of the enclosure or a cylindrical section of the enclosure not adjacent to a cylindrical surface section of the chamber.

The fluid inlet may also be arranged at a cylindrical surface section of the enclosure, wherein at least one inlet opening is arranged at the cylindrical surface section of the chamber, so that, for at least one predetermined relative angular position of the cylindrical surface section of the chamber vs. the cylindrical surface section of the enclosure, the inlet opening at least partially overlaps with the fluid inlet.

This allows for a switching of the fluid influx into the device of the invention lever-aging the same "encoding" of a fluid communication route by way of overlapping openings on cylindrical surface section of the chamber and the cylindrical surface section of the enclosure, as was otherwise described in the present disclosure in the context of the overlapping of the exit openings with the transmission openings. For example, such an embodiment, a temperature control may be implemented by using a cold and hot fluid inlet and controlling the respective fluxes by way of overlapping openings in the chamber, depending on the relative angular position thereof.

In an embodiment, a seal, such as, a polymer lip seal, a polymer bulge or foam, or the like, is provided along edges of the exit openings and/or the transmission openings to prevent fluid from flowing into a clearance space between the cylindrical surface section of the chamber and the adjacent cylindrical surface section of the enclosure. Alternatively, to achieve a similar sealing effect, the clearance space between the cylindrical surface section of the chamber and the cylindrical surface section of the enclosure could also be filled by a highly elastic silicone, a grease or, depending on the clearance distance, by an higher viscosity oil, wherein adherence of the grease or oil to the adjacent cylindrical surface section of the chamber and the enclosure may be advantageous.

These types of seals prevent a sort of crosstalk, that is, a transmission of fluid between an exit opening and a non-masking transmission opening, that is, a transmission opening that has no overlapping relative angular position with the said exit opening.

A similar effect might also be achieved using a a seal, such as, a labyrinth seal, which may be provided along a circumference of the cylindrical surface sections of the chamber and/or the enclosure, wherein the seal preferably extends substantially normal relative to the common cylinder axis of the cylindrical surface sections of the chamber or the enclosure.

Such a seal allows to prevent a crosstalk between exit openings and/or transmission openings-and thus corresponding fluid outlets-by suppressing a fluid flow inside the clearance space between the cylindrical surface section of the chamber and the cylindrical surface section of the enclosure along an axial component of chamber and the enclosure.

The device of the invention may be used in air conditioning systems, in particular, in air-conditioning systems of a vehicle or in a static space air-conditioning system. In such arrangements, the device of the invention allows distribution of air flow between different regions of the vehicle or the static space-such as a room or a building-respectively.

In particular, in such scenarios, it is clear that it may even be beneficial to use multiple devices according to the invention in separate regions of the vehicle or the static space, to cause a more local arrangement of the fluid distribution rather than a central one. For example, it may be beneficial to arrange 4 such devices of the invention in a passenger car, wherein one such device is deployed for each zone (front-left, front-right, rear-left, rear-right) to allow individualized fluid distribution schemes in each of said zone.

Further features and effects of the invention will become apparent by the following detailed description of various exemplary embodiments of the inventions-or parts thereof-in conjunction with the drawings.

## Brief Description of the Drawings

FIG. 1 schematically illustrates a view of the device of the invention having a chamber inside an enclosure, in different views, i.e. a side-view, a top view, and with its cylindrical surface sections rolled flat;

FIG. 2 schematically illustrates a view of the device according to Fig. 1 further indicating an inlet and multiple outlets, and further illustrating a schematic mapping table;

FIG. 3 schematically illustrates a symbolic function diagram for a fluid flow routing from the inlet and to multiple outlets, indicating configurations of the exit and transmission openings;

FIG. 4 schematically illustrates a block diagram of the device, having a drive and a drive controller/computer, the drive receiving control signals from the drive controller implementing a mapping table;

FIG. 5a schematically illustrates various configurations of embodiments of the device of the invention in a side-view with options to implement the fluid inlet;

FIG. 5b shows an air flow simulation inside a fluid distribution device according to an embodiment of the invention;

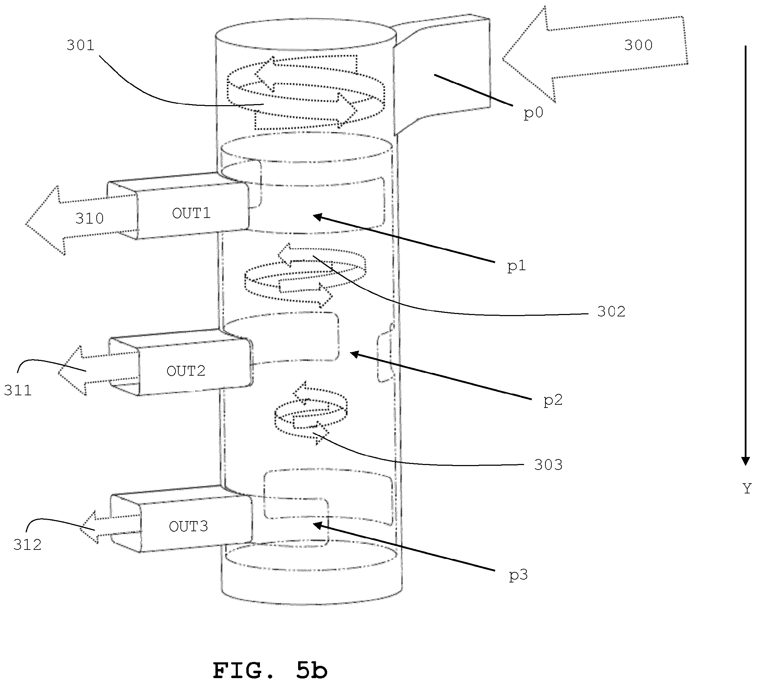

FIG. 5b schematically illustrates an example implementation of an embodiment of the device of the invention;

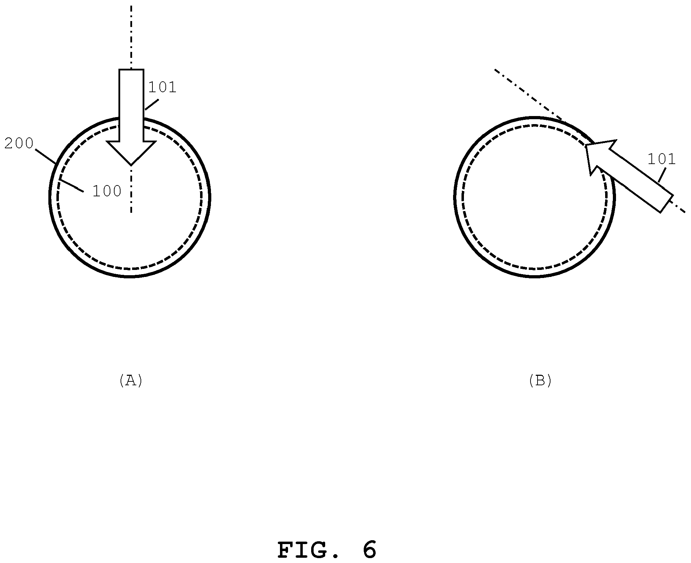

FIG. 6 schematically illustrates two aspects of the device of the invention having differently arranged fluid inlets;

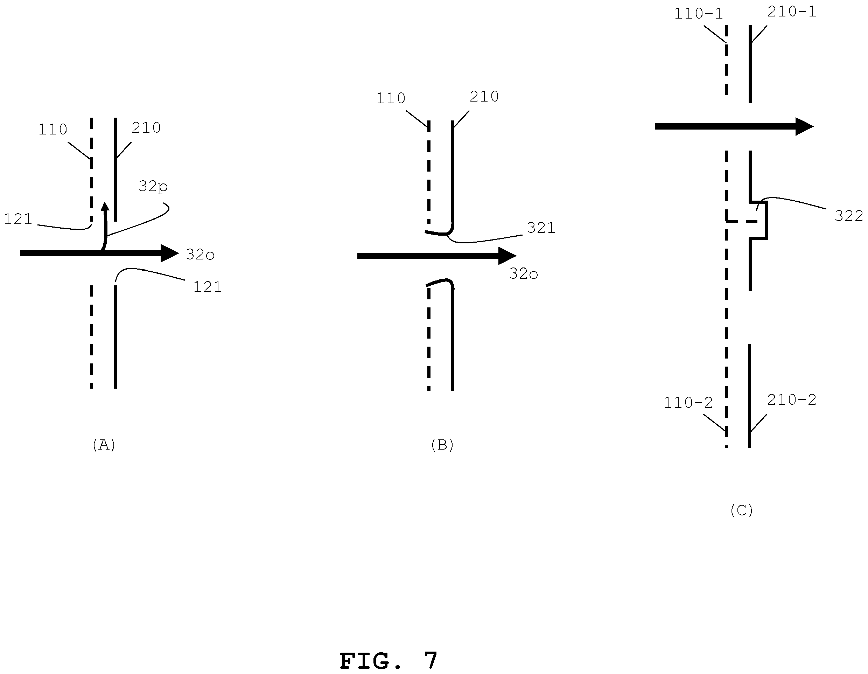

FIG. 7 schematically illustrates the arrangement of seals to prevent parasitic fluid flows;

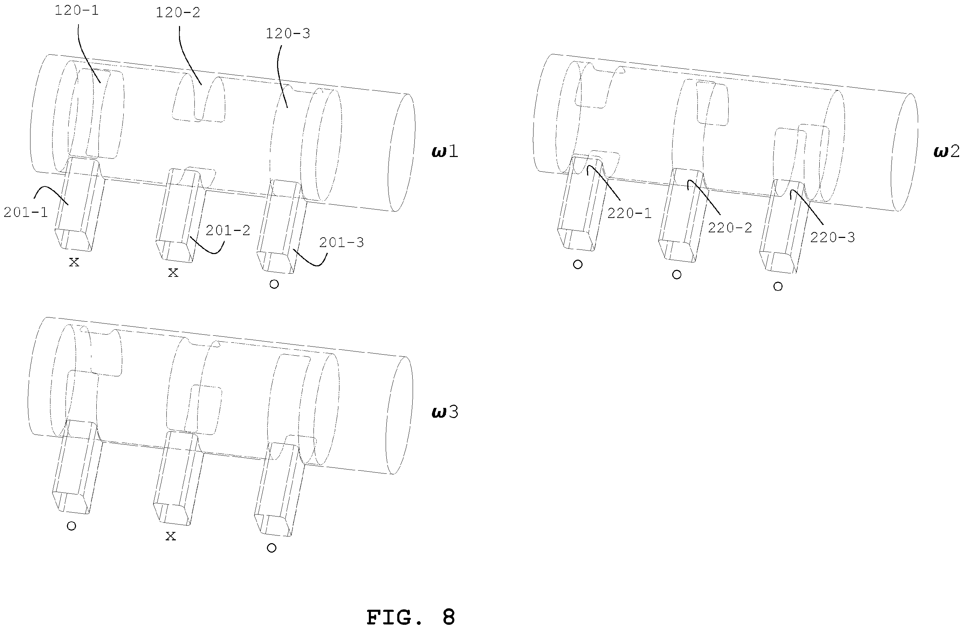

FIG. 8 schematically illustrates an implementation of another embodiment of the device of the invention having three outlets, in different operational states;

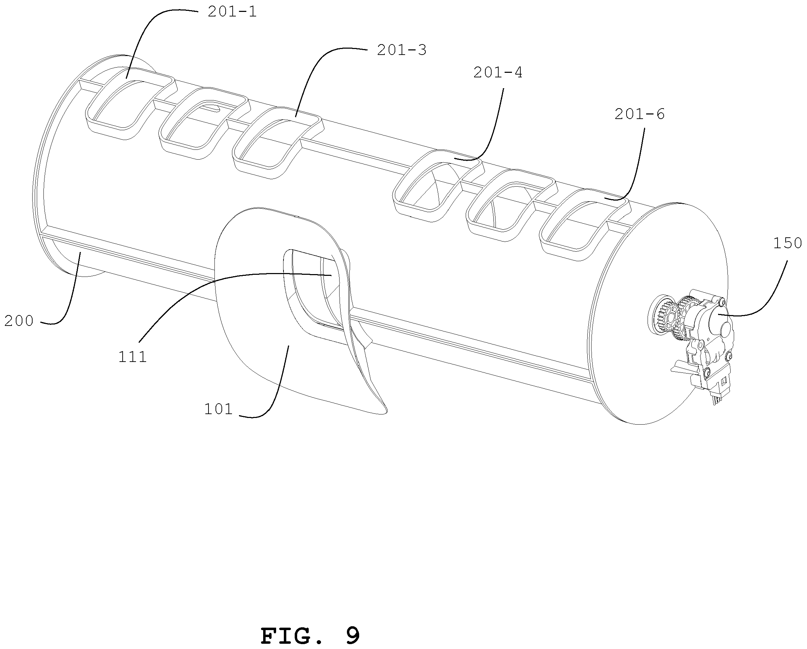

FIG. 9 schematically illustrates an implementation of another embodiment of the device of the invention having a single inlet and six outlets located along the axial length of the cylindrical surface of the enclosure.

## Detailed Description

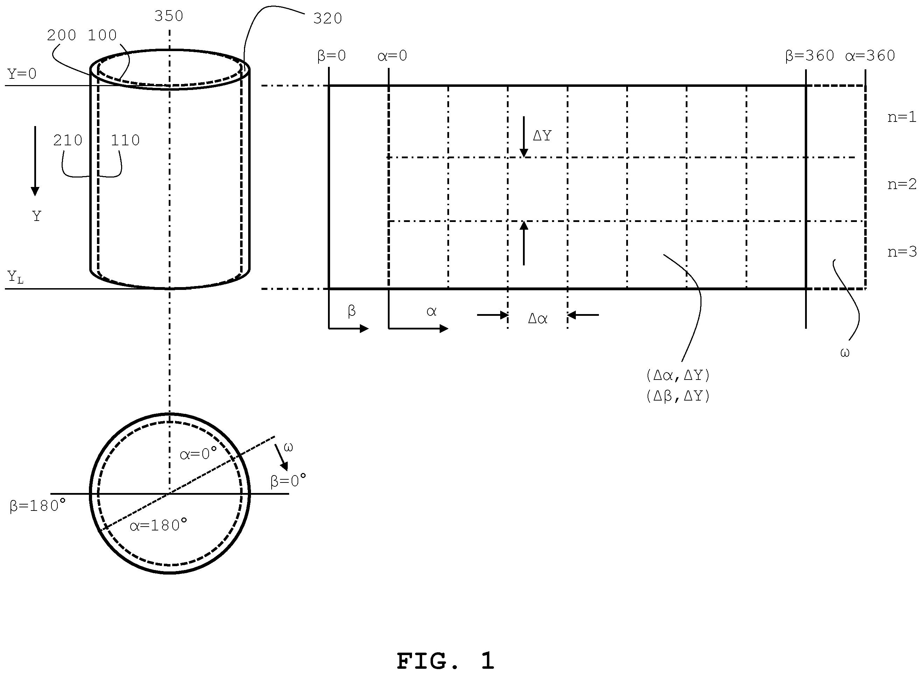

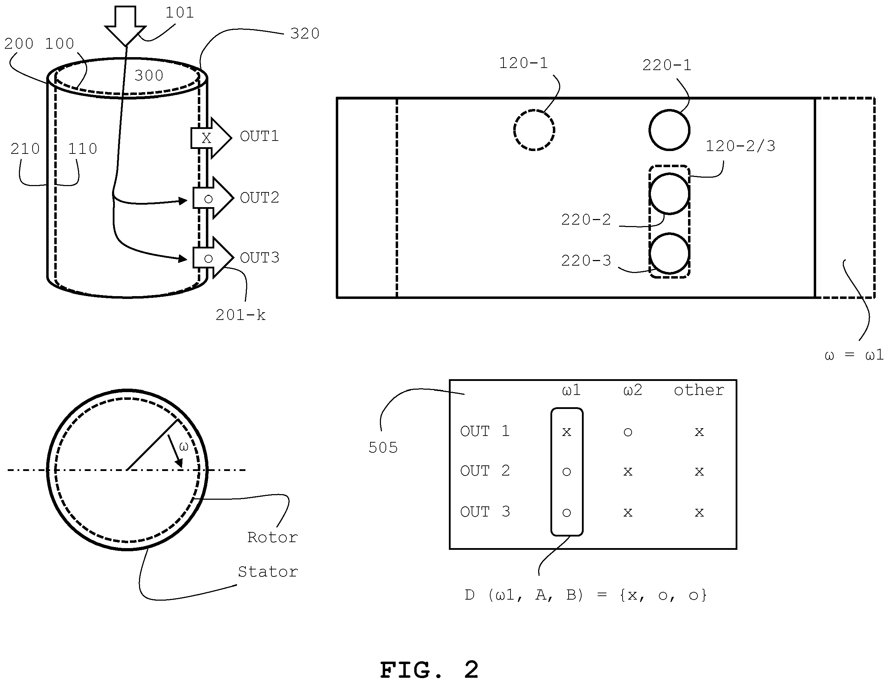

FIGS. 1 and 2 schematically illustrate a device for distributing a fluid from a fluid inlet to a set of fluid outlets. FIG. 1 focusses on two main elements of the device-chamber 100 and enclosure 200-whereas FIG. 2 adds illustration of further elements, such as, inlet 101, outlets 201-k, as well as exit 120 and transmission openings 220-k. Elements of chamber 100 are illustrated by dashed lines; elements of enclosure 200 are illustrated by solid lines.

In simplified terms, the distribution function D of the fluid can be regarded as a function of the relative angular position $\omega$ between chamber 100 and enclosure 200 as well as the absolute position of exit openings 120 in the cylindrical surface section 110 of chamber 100 and transmission openings 220-k in the cylindrical surface section 210 of enclosure 200 along grids ($\Delta\alpha$, $\Delta Y$) and ($\Delta\beta$, $\Delta Y$).

The distribution function D can be considered a digital encoding. The below description therefore refers to digital quantization by applying so-called delta coordinates.

FIG. 1 illustrates an overview of chamber 100 arranged inside enclosure 200. The figure provides different illustrative views of the device of the invention, i.e. a side view (top left), a top view (bottom left), and a schematic illustration of the cylindrical surface sections of both the chamber and the enclosure as rolled out flat onto the planar surface of the paper sheet (top right).

The outer surface of chamber 100 comprises cylindrical surface section 110, and the inner surface of enclosure 200 comprises cylindrical surface section 210. Both cylindrical surface sections 110, 210 share a common cylinder axis 350. Enclosure 200 surrounds chamber 100, wherein the diameter of the cylindrical surface section 110 is chosen such that cylindrical surface section 110 of chamber 100 is adjacent to the cylindrical surface section 210 of enclosure 200, with the consequence that the cylindrical surface sections of chamber 100 and enclosure 200 are in close proximity to one another and may partly be in contact.

The contact between the two cylindrical surface sections 110, 210 is illustrated by reference numeral 320. Such contact would preferably be very loose to allow for a gliding of one surface section along the other during a rotation of the cylindrical surface section 110 of chamber 100 relative to the cylindrical surface section 210 of enclosure 200. The cylindrical surface sections 110, 210 may be close enough so that a sliding friction applies (which would act as a strong attenuation force for any rotational movement), however, still needs to be low enough that a relative rotational displacement of the two components is easily possible. Alternatively, the cylindrical surface sections 110, 210 may be arranged with a small clearance space between them substantially avoiding any friction between the cylindrical surface sections 110, 210 during relative rotation, wherein, however, the space should be small enough to suppress a relevant flow of fluid between the cylindrical surface sections 110, 210-a so called parasitic fluid flow.

Indeed, both alternatives could happen simultaneously for different portions of the cylindrical surface sections 110, 210, or different the cylindrical surface sections 110, 210 in cases where the chamber 100 and the enclosure 200 are subdivided in a plurality of corresponding cylindrical surface sections 110, 210 each.

Chamber 100 and enclosure 200 are adapted to change the relative angular position $\omega$ relative to each other, by rotation of one of the two, or both about a common cylinder axis 350. Preferably, the chamber 100 is being rotated about the common cylinder axis 350 while the enclosure 200 remains fixed.

FIG. 1 also defines several angles: chamber 100 is shown having absolute angular coordinate $\alpha$, e.g., with $\alpha = 0 = 360°$, $\alpha = 180°$, and enclosure 200 is shown having absolute angular coordinate $\beta$, e.g., likewise, with $\beta = 0 = 360°$, $\beta = 180°$. The angular coordinates are centered about axis 350. Relative angular position $\omega$, which is the more relevant measure in the context of this disclosure, is defined as the angle between $\alpha$ and $\beta$, e.g., the displacement angle between $\alpha = 0°$ and $\beta = 0°$.

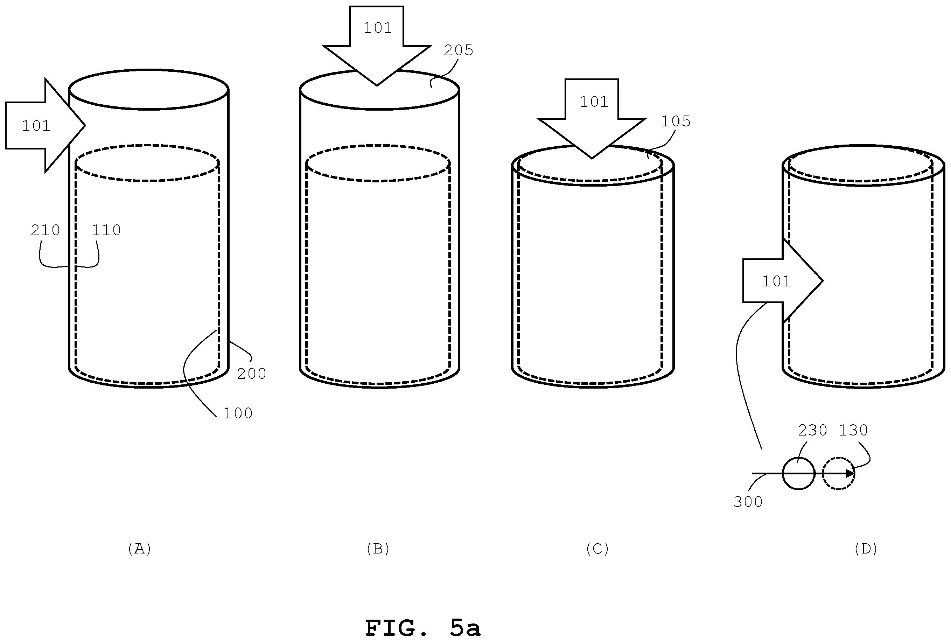

FIG. 1 shows the length $Y_L$ for both chamber 100 and enclosure 200, in a coordinate system along the axis Y, which may be parallel to the common cylinder axis 350. $Y_L$ may be substantially equal, or, as explained further below in conjunction with FIG. 5, may be of different length for both components. The perimeter of cylindrical surface section 110 (i.e., its circumference) is slightly shorter than that of cylindrical surface section 210, however, this difference can be neglected in the context of most of the present disclosure.

Rolling cylindrical surface sections 110 and 210 of into a planar surface, such as the paper plane, cylindrical surface section 210 of enclosure 200 would have a width that corresponds to its perimeter (i.e., the cylindrical surface section diameter $* \pi$). This is nearly identical for cylindrical surface section 110, as can be seen in FIG. 1.

Positions on the cylindrical surface section 110 of the chamber can be identified by angular coordinates in the range of $\alpha = 0°$ to $\alpha = 360°$ and their Y-coordinates; similarly, positions on the cylindrical surface section 210 of the enclosure can be identified by angular coordinates in the range of $\beta = 0°$ to $\beta = 360°$ and their Y-coordinates as well.

Due to the relative angular position $\omega$ between both cylindrical surface sections 110 and 210, the flattened representations thereof are illustrated with a horizontal offset relative to another, representing the relative angular displacement. The representation in FIG. 1 is not at scale, however, in the example, angle $\omega$ can be assumed to be $45° = 360°/8$, and the offset would thus resolve to 1/8 of the perimeter.

In the context of the present disclosure, the analogue coordinates ($\alpha$, $\beta$, $\omega$, Y) are quantified into delta ($\Delta$) coordinates. For simplicity of explanation, $\Delta$ values are equally distributed over the ranges of the coordinates, and the exponent N is introduced as N = 3. It follows that the relative angular position $\omega$ can assume values that are separated by $\Delta\omega$, for example $\Delta\omega = 360°/8$, with 8 being $2^N$, or $\Delta\omega = 45°$. The same applies to absolute angles $\alpha$ and $\beta$ resulting in $\Delta\alpha$ and $\Delta\beta$ with, for example, with $\Delta\alpha = \Delta\beta = 45°$. Having $\Delta\alpha = \Delta\beta$ is convenient, however, not required. Last but not least, the length $Y_L$ can similarly be divided into sectors $\Delta Y$, with $\Delta Y = Y_L/N$. Sectors can be identified by index n; in the example, there are N = 3 sectors, identified as n=1, n=2 and n=3.

The $\Delta$ coordinates allow defining a grid ($\Delta\alpha$, $\Delta Y$) for surface 110, and a grid ($\Delta\beta$, $\Delta Y$) for surface 210. In the example depicted in FIG. 1, both grids have $2^N * N = 8 * 3 = 24$ elements. The present disclosure sometimes identifies the grid elements by rows (e.g., top-down: first, second and third row) and by columns (e.g., left-right: first, second, ... column).

In the device of the invention, as illustrated in FIG. 2, the fluid flows into chamber 100 via the fluid inlet and, after flowing inside the chamber 100 along more or less linear paths and/or vortex pathways-which may lead to a mixing of fluid flows entering the chamber 100 through multiple inlets-exits the chamber 100 through one or more exit openings 120 of the cylindrical surface section 110 of the chamber 100, and onwards exits the enclosure through transmission openings 220-k of the cylindrical surface section 210 of the enclosure 200 towards the outlets OUT1, OUT2, OUT3 if exit opening(s) 120 and transmission openings 220-k overlap due to the relative angular positioning of the cylindrical surface section 110 of the chamber 100 vs. the cylindrical surface section 210 of the enclosure 200.

For example, an overlapping of exit and transmission openings 120-k and 220-k, respectively, by symbol "o", which means, a efflux of fluid from the outlet (OUT2, OUT3 in the example) is enabled-"flow"-and a non-overlapping of exit and transmission openings 120-k and 220-k, respectively, by symbol "x", indicating that an efflux of fluid from the outlet (OUT1 in the example) is prevented-"no flow".

Indeed, the device of the invention can be considered conceptually similar to a digital encoder encoding the distribution D of the fluid from the inlet to a plurality K of outlets by a logical AND function of the exit opening(s) gated with the transmission openings.

In simplified terms, the distribution D = {D1, Dk, ..., DK} of the fluid can thus be considered a function of the relative angular position $\omega$ between cylindrical surface section 110 of the chamber 100 and the cylindrical surface section 210 of the enclosure 200 as well as the absolute position of openings (on the cylindrical surface section 110 of the chamber 100 and the cylindrical surface section 210 of the enclosure 200) along grids $(\Delta\alpha, \Delta Y)$ and $(\Delta\beta, \Delta Y)$.

The positions of the openings can be summarized as allocations A (the presence or absence of an opening in grid space $(\Delta\alpha, \Delta Y)$, and allocations B (the presence or absence of an opening in grid space $(\Delta\beta, \Delta Y)$.

Accordingly, in general, the distribution D can be expressed as:

$$D\,(\omega, A, B) = \{D1, Dk, ...\, DK\}, \text{ with } Dk = o \text{ for "flow" and } Dk = x \text{ for "no flow".}$$

As, for example, shown in FIG. 2, for K = 3, the distribution D can be expressed as follows:

$$D\,(\omega, A, B) = \{D1, D2, D3\} = \{x, o, o\}.$$

While the allocations A and B do not change, the relative angular position $\omega$ can change, with the consequences that will become more apparent below.

FIG. 2 illustrates the device of the invention having a single inlet and multiple outlets (here, K = 3). FIG. 2 also a mapping table for the distribution D.

FIG. 1 schematically illustrates the device of the invention having inlet 101 coupled to chamber 100, allowing an influx of fluid 300 into chamber 100. Enclosure 200 has K = 3 outlets 201-k (i.e., OUT1, OUT2, and OUT3) coupled thereto, which, are "switchable" depending on the relative angular position of the cylindrical surface section 110 of the chamber 100 vs. cylindrical surface section 210 of the enclosure 200. Outlets 201-k can be arranged with the same $\Delta\beta$-coordinate, i.e., in the same column of the $(\Delta\beta, \Delta Y)$ coordinate grid-such an arrangement is convenient for explanation and represents a common use case, however, is not required.

In such a single-column arrangement, the total number K of outlets 201-k corresponds to the number of grid rows N. The example is illustrated with K = N =3.

FIG. 2 illustrates the relative position between cylindrical surface sections 110 and 210 to be $\omega = \omega1$, e.g., 45°. The cylindrical surface section 210 of enclosure 200 has openings 220-1, 220-3 and 220-3 located substantially along the common axis 350 of both cylinders, which translates to a single column arrangement in the planar surface representation of the cylindrical surface section (top right of FIG. 2).

In this representation of FIG. 2 exit opening 120-1 in the cylindrical surface section 110 of chamber 100, represented as dashed line, is located in the first (top) row. At the given relative angular position $\omega = \omega1$, there is no overlap with transmission opening 220-1 in the cylindrical surface section 210 of enclosure 200; and therefore no fluid efflux from the chamber 100 through these non-overlapping openings 120-1, 220-1 is possible and thus corresponding outlet OUT1 does not provide a flow.

Exit opening 120-2/3 (dashed rectangular) is shaped so as to span both row indices n=2 and n=3 and thus enables an overlap with both transmission openings 220-2 and 220-3 at the same time; as a consequence, corresponding outlets OUT2 and OUT3 would provide a flow as fluid efflux through these overlapping openings 120-2/3, 220-2, 220-3 is possible.

The arrangement of openings 120-1 and 120-2/3 is an example for allocation A; the arrangement of openings 220-1, 220-2, 220-3 is an example for allocation B. In the example, opening 120-2/3 is a combined exit opening. Mapping table 505 shows the corresponding distribution function D $(\omega1, A, B) = \{x, o, o\}$.

It can be seen from mapping table 505 that distribution function D $(\omega2, A, B) = \{o, x, x\}$, i.e., a change to relative angular position $\omega2$ would remove the overlap of openings 120-1 and 120-2/3 and lead to an overlapping of openings 120-1 and 220-1. For any other values of the relative angular position $\omega$, the distribution function D = {x, x, x}, i.e. none of the openings is overlapping.

As can be taken from FIG. 2, in this example, the inner chamber cylinder 100 is implemented as a rotor and the outer enclosure cylinder 200 as a stator; while a movement of both could be envisaged, it is sufficient if only one of the two rotates. While fluid inlet 101 can be arranged at the cylinder surfaces of the enclosure 200 and/or chamber 100 it is also possible to arrange the inlet 101 at the cylinder end faces.

While not shown in FIG. 2, it is envisaged that fluid outlets 201-k comprise connectors for attaching pipes or ducts. This way, fluid efflux from the outlets 201-k is routed to different locations, such as, for example, different zones of a vehicle, or different zones of a room or building.

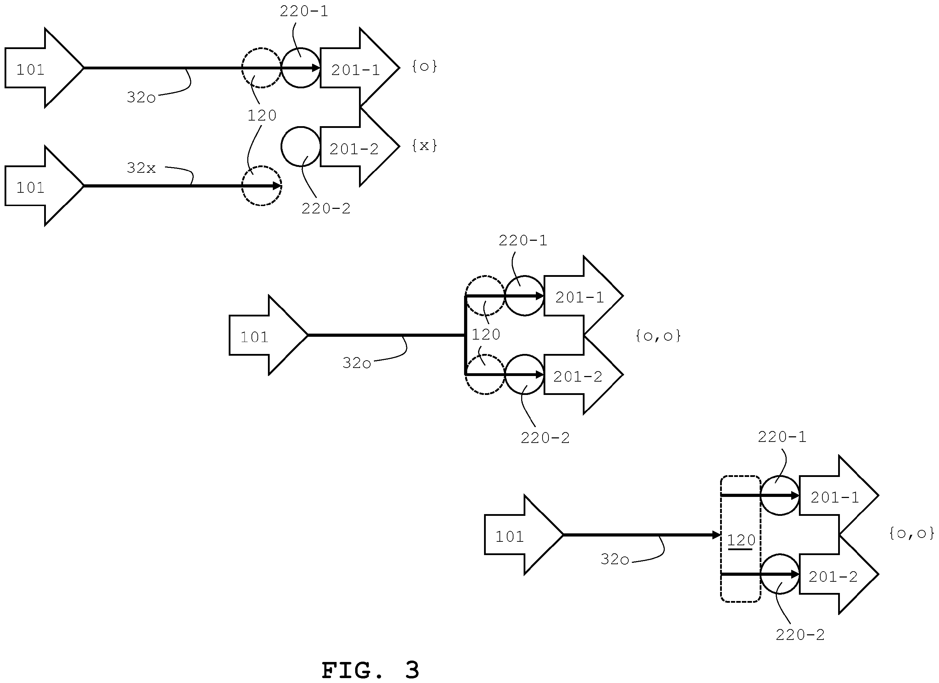

FIG. 3 illustrates a symbolic function diagram for fluid flow from inlet 110 to multiple outlets 201-n, with various opening configurations in the inlet-outlet passage from an exit opening 120 (dashed, arranged at the cylindrical surface section of chamber 100) to transmission opening 220 (arranged at the cylindrical surface section of enclosure 200).

In the first example, there is fluid flow 32o via overlapping openings, with a distribution D = {o}. In other words, a fluid is routed from inlet 101 via openings 120 and 220-k to outlet 201-n; in the second example, there is no fluid flow 32x, because, while the flow may "enter" exit opening 120, it is blocked at cylindrical surface section 210 (no transmission opening 220 overlapping the exit opening 120). The distribution would thus be D = {x}. In the third example, there is fluid flow 32o routed via pairs of two overlapping openings 120/220-1, 120/220-2, resulting in D = {o, o}. In the fourth example, a fluid flow 32o via two pairs of openings 120/220-k, results in D = {o, o}.

In this fourth example, exit opening 120 is shown as a combined opening (same as exit opening 120-2/3 in FIG. 2). The fourth example is functionally equivalent to the third example, however, structurally different in having a combined opening. Indeed, if the distribution function D demands, two or more openings located in the same row and/or the same column, they can be structurally combined.

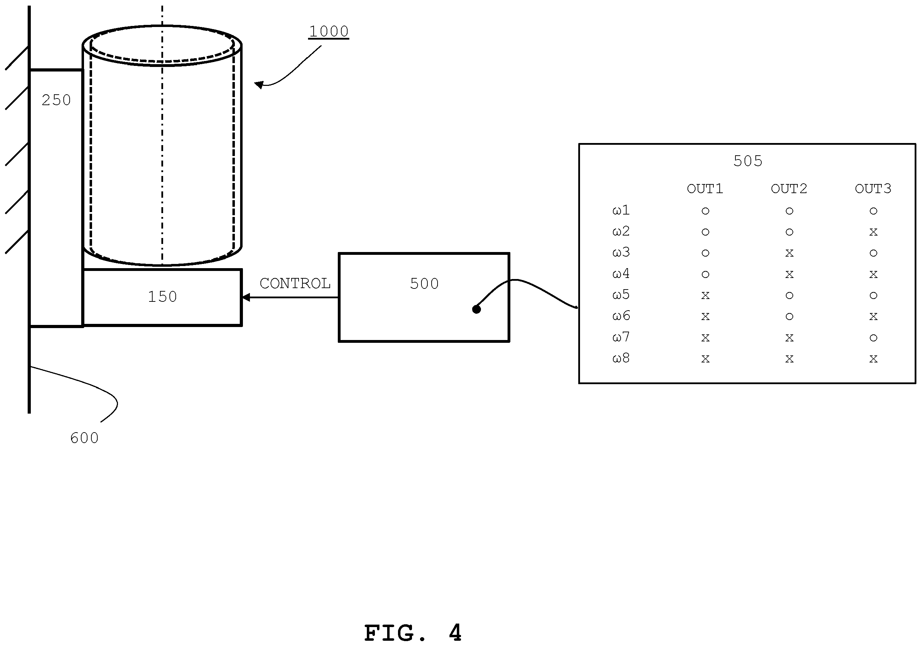

FIG. 4 illustrates a block diagram for a device for distribution of a fluid flow 1000, according to the invention having a drive 150, drive 150 receiving control signals from a control device, such as, a computer 500 that implements a mapping function/table 505. For simplicity, in this representation, an inlet and outlets are omitted.

In use, for example, device 1000 can be mounted arranged in a vehicle 600 via support 250. Control device 500 may belong to the in-vehicle air control system or be implemented as a separate control device.

In use, depending on the desired air flow distribution, control device 500 may accesses mapping table 505 and identify relative angular position angle $\omega$. In the example, there are 8 different angles $\omega 1$ to $\omega 8$. The identified angle is then communicated to drive 150 as a control signal CONTROL so that drive 150 moves the cylindrical surface section of the chamber vs. cylindrical surface section of the enclosure to be in the specified relative angular position $\omega$. Drive 150 can be implemented, for example, as a stepper motor, and, additionally, it is possible to measure the relative angular position $\omega$ of the cylindrical surface section of the chamber vs. the cylindrical surface section of the enclosure or any angular movements or deviations by an angular sensor and feed the actual relative angular position back to control device 500 to control required re-adjustments of the relative angular position.

It is noted that obtaining values for the relative angular position $\omega$ is not restricted methodically to a lookup in a mapping table. The mapping can also (or additionally) include other methods, such as, the calculation of logical formulas. Formulas and tables are merely different ways to express logical relations (see also FIG. 8 for a further example).

FIG. 5a illustrates the device of the invention in a side-view and showing numerous options to arrange the fluid inlet relative to the cylindrical surface section of the chamber and the cylindrical surface section of the enclosure.

In views (A), (B), and (C), the arrangement of fluid inlet 101 in relation to chamber 100 is irrelevant for the fluid flow routing. Inlet 101 receives the fluid guiding it to the inside of chamber 100.

Views (A) and (B) of FIG. 5a show an arrangement of chamber 100 and enclosure 200 in which enclosure 200 has a larger axial length (cf. Y-coordinate in FIG. 1) than chamber 100. In such a case, fluid inlet 101 can be arranged at a position where chamber 100 and enclosure 200 do not overlap due to their different lengths. In view (A) fluid inlet 101 is arranged and the cylindrical surface 210 of enclosure 200 whereas in view (B) fluid inlet 100 is arranged at a top surface 205 of enclosure 200.

Sections (C) and (D) of the figure show an arrangement of chamber 100 and enclosure 200 having substantially similar axial lengths. Similarly, to view (B), in view (C) shows fluid inlet 101 being arranged at top surface 105 of chamber 100; this necessitates that the top surface of chamber 100 is exposed to the outside of enclosure 200. Surface 105 may or may not rotate together with chamber 100.

View (D) of FIG. 5a shows fluid inlet 101 as being implemented by additional inlet openings 230 and 130 in the enclosure 200 and the chamber 100, respectively. If openings 230 and 130 overlap, fluid flow 300 is allowed to enter chamber 100. In this embodiment, the entry of fluid into the device is also subject to the distribution function D and thus also encoded in the arrangement of openings as per allocations A and B. Implementing fluid inlet 101 as per this embodiment allows to selectively close or open the fluid inlet, merely by changing the relative angular position $\omega$ between the respective cylindrical surface section of the chamber vs. the corresponding cylindrical surface section of the enclosure. The device therefore allows further flexibility during operation.

FIG. 5b illustrates an arrangement according to view (A) of FIG. 5a. In the embodiment shown, there are three outlets OUT1, OUT2, OUT3 and the air flow inside the chamber is schematically indicated by swirling arrows 301, 302, 303; the thickness of the arrows schematically indicates the flow speed (in m/s) of the fluid at the respective position inside the chamber and at the fluid outlets OUT1, OUT2, OUT3.

As shown, the flow extends downwards from the inlet along a somewhat helical path (schematically exemplified by arrows 301, 302, 303) until it exits through one of the fluid outlets OUT1, OUT2, OUT3 while the flow speed decreases due to internal friction as well as friction between the fluid and the walls of the chamber. Additionally, according to the simulation, the fluid pressure drops steadily along the length of the chamber from p0 at the fluid inlet to values p1>p2>p3 and p0>p1.

The mass flows 310, 311, 312 of the fluid at the fluid outlets OUT1, OUT2, OUT3 is also different given the respective flow speed of the fluid at the positions of the three outlets OUT1, OUT2, OUT3 inside of the chamber. The resulting flow speed- and hence, mass flow-of the fluid, assuming equally sized outlet cross sections, thus depends on the position of the outlet in the Y direction relative to the fluid inlet into the chamber. This also means that, depending on the requirement of the application, the mass flows 310, 311, 312 at the three outlets OUT1, OUT2, OUT3 can either be allowed to be different (by using outlets of substantially similar cross section, as shown in Fig. 5b) or similar by designing outlets of differing cross section and thus influencing the flux through such outlets (not shown).

The flux, i.e. the mass flow 310, 311, 312 of fluid through an outlet can also be modulated by modifying the amount of overlap of the respective exit opening 120-k and the transmission opening 220-k for a fluid outlet, effectively leading to a reduced flux through that outlet even if the mass flow would be higher at the specific position Y of the fluid outlet.

FIG. 6 illustrates two additional aspects of the arrangement of fluid inlet 101 at the device. FIG. 6 shows top views (A) and (B) of the device of the invention, with enclosure 200 and chamber 100, and with alternative arrangements-that may also be combined in the case of multiple fluid inlets and where required.

In general, the fluid inlet 101 guides the fluid flow in a particular direction inside the chamber 100, where it will be distributed and, as the case may be, subject to mixing of various fluid streams. After an initial flow in the direction of entry, the fluid may exhibit turbulence inside the chamber. However, the specific arrangement of fluid inlet 101 in relation to chamber 100 influences the flow-and potential turbulence-of the fluid inside chamber 100 and hence the way the fluid may distribute and eventually leave chamber 100 (through openings, not illustrated here).

In particular, it needs to be borne in mind that both turbulence as well as flow along a surface may cause internal friction in the fluid and may thus lead to spatially impeded (slow) flow and pressure drops in the fluid flow between the inlet and the outlet. Depending on the specifics of the implementation, it is thus possible to arrange the fluid inlet between (and including) the arrangements depicted in views (A) and (B) of FIG. 6.

View (A) shows fluid inlet 101 oriented along a line that is extending radial relative to the common axis of cylindrical surface sections of enclosure 200 and of chamber 100. The orientation may include an axial component, meaning that inflowing fluid would also be given a direction along the common cylinder axis. In this view, the radius is shown as a dash-dotted line. This embodiment may be beneficial because of a comparatively low pressure drop of the fluid along its path inside the chamber due to reduced internal friction given there is only little flux "along" the inner cylinder surface of the chamber 100. This may lead to a more even pressure distribution in efflux pressure from the various fluid outlets.

View (B) shows fluid inlet 101 oriented along a line that has a tangential component relative to the cylinder surface sections of enclosure 200 and chamber 100. The tangent is shown in this view by a dash-dotted line. Same as in the case of view (A), the orientation may include an axial component, meaning that inflowing fluid would also be given a direction along the common cylinder axis, i.e. the fluid would ideally travel along a threaded line on the inside of the cylinder surface.

Such an embodiment having a tangential orientation of the inlet, may be beneficial because a relatively homogenous or laminar flow inside the cylinder (compared to the radial arrangement). On the other hand, given the flow is along the inner cylinder surface, internal friction (layer-by-layer) of the fluid flow may impose a greater pressure drop on the fluid along its path through the chamber-and thus also to different efflux pressures from the various fluid outlets; in other words, fluid outlet near the inlet may have a higher efflux pressure than fluid outlets located further away from the fluid inlet.

Implementations that are combinations of both arrangements are of course possible and may lead to a requirement-specific balance between a homogenous or laminar flow and a specific pressure drop along the chamber.

FIG. 7 illustrates schematically a cross-section of the cylindrical surface sections 110, 210 of the chamber and the enclosure in the area of an overlapping exit and transmission opening.

As illustrated in view (A) of FIG. 7, the main efflux of fluid is through the overlapping openings (bold arrow). However, depending on clearance distance between the cylindrical surface section 110 of the chamber and the cylindrical surface section 210 of the enclosure, a parasitic fluid flow (thin arrow) may also develop into such clearance space between the cylindrical surface sections. Such parasitic flow could eventually leave through other transmission openings (not illustrated in FIG. 7), which could lead to an unwanted distribution of fluid towards fluid outlets that are not supposed to be active, i.e. no fluid flow should emanate from them.

To avoid parasitic flow entering the clearance space, a seal 321 can be provided at the edges 121 of the exit opening and/or the transmission openings so as to seal off the clearance space when the openings are substantially overlapping. View (B) depicts such a seal 321 in the form of a soft material lip seal, e.g. made from silicone, in a simplified form.

The seal could likewise be formed by a soft material rope arranged inside the clearing space and around either or both of the openings. It is noted that, generally, due to the dimensions of the clearance space vs. the fluid outlet cross section, there will not need to be a highly effective seal but a flow resistance may suffice to sufficiently stop any parasitic flow into the clearance space between the cylinders.

View (C) of FIG. 7 shows another possible option for preventing a parasitic flow along the axial length of the cylindrical surface sections and between multiple fluid outlets arranged in multiple rows along the cylindrical surface sections using a labyrinth seal along the circumference of cylindrical surface sections. View (C) shows a schematic labyrinth seal 322 arranged substantially circumferentially (along the normal of the common cylinder axis) between first cylindrical surface section 110-1, 210-1 and second cylindrical surface sections 110-2, 210-2 of the chamber and the enclosure, respectively. The embodiment allows rotation of cylindrical surface sections 110-1, 110-2 of the chamber relative to cylindrical surface sections 210-1, 210-2 of the enclosure while representing a flow resistance against parasitic flow with a component along the longitudinal axis of the device which could lead to a "cross talk" between corresponding exit and/or transmission openings.

FIG. 8 illustrates an implementation of the device having three outlets 201-1, 201-2, 201-3 in three different operational stats at relative angular positions ω1, ω2, ω3.

As can be seen, the cylindrical surface section of the chamber is depicted in 3 different rotational states relative to the enclosure which leads to an encoded overlapping of the exit openings 120-1, 120-2, 120-3 of the chamber with the transmission openings 220-1, 220-2, 220-3 and thus fluid outlets 201-1, 201-2, 201-3 of the enclosure according to the following mapping:

|  | ω1 | ω2 | ω3 | other ω | other ω | other ω | other ω |
|---|---|---|---|---|---|---|---|
| Oben | o | o | o | x | x | x | x |
| Mitte | x | x | o | o | o | x | o |
| Unten | x | o | o | x | o | o | o |

As throughout the present specification, "o" is understood to mean an overlap of the respective openings, i.e. fluid is flowing from the fluid outlet (or, the fluid outlet is active), while "x" means no overlap of the respective openings, i.e. fluid is not flowing from the fluid outlet (or, the fluid outlet is inactive).

FIG. 9 illustrates an embodiment of the device with six outlets 201-k (k=1 to K=6) and a single inlet 101. The outlets are arranged along the cylinder face of the enclosure 200 in a substantially axial arrangement, i.e. parallel to the cylinder axis (not shown in FIG. 9). In other words (or a different representation according to FIG. 1), outlets 201-1 to 201-6 are arranged in the same column, in two pairs of rows (with 3 outlets each). The grid row in the center does not have an outlet but has inlet 101.

Inlet 101 can, but need not be located in the same column as the outlets 201-1 to 201-6. Instead, inlet 101 can be positioned with at an angular offset relative to the outlets, as shown in FIG. 9.

Indeed, the embodiment of FIG. 9 shows two almost separate fluid distribution devices of the invention in one: as can be seen, in the middle of fluid inlet 101, an endface-like separator wall 111 is located to effectively provide two separate, but coaxial chambers inside the enclosure 200. A fluid flow entering through inlet 101 will be split in a left- and a right-side flow stream and flow both ways, that is, in the left side chamber as well as the right side chamber. Left side chamber has exit openings effecting the switching of fluid outlets 201-1 to 201-3 whereas the right side chamber has exit openings effecting the switching of fluid outlets 201-4 to 201-4.

As can be seen in FIG. 9 drive 150 is attached to the outside of the cylinder end face of enclosure 200 and coupled to either only the right side chamber or both left and right side chamber. In the case where drive 150 is coupled only to the right side chamber, a second drive (not shown) would be arranged at the cylinder end face opposite the visible one and coupled to the left side chamber. In such case, the relative angular positions of both the left and right side chambers-and thus fluid distribution by both sides-could be controlled individually.

## Claims

1. Device (1000) for distributing a fluid (300) from a fluid inlet (101) to a set (k) of fluid outlets (201-k), the device (1000) comprising:

   a chamber (100) that is adapted to allow the fluid (300) to enter the chamber (100) from the fluid inlet (101), wherein an outer surface of the chamber (100) comprises a cylindrical surface section (110) of the chamber (100);
   an enclosure (200) surrounding the chamber (100), wherein an inner surface of the enclosure (200) comprises a cylindrical surface section (210) of the enclosure (200);
   wherein the cylindrical surface sections (110, 120) of the chamber (100) and the enclosure (200) share a common cylinder axis (350), and the cylindrical surface sections (110, 210) of the chamber (100) and the enclosure (200) are arranged adjacent to one another;

wherein the cylindrical surface section (110) of the chamber (100) has at least one exit opening (120) adapted to allow the fluid (300) to exit from the chamber (100);

wherein the cylindrical surface section (210) of the enclosure (200) has at least two transmission openings (220-k) adapted to allow the fluid (300) to be routed to corresponding fluid outlets (201-k) in fluid communication with the transmission openings (220-k); and

wherein the chamber (100) and the enclosure (200) are adapted to allow a change of the relative angular position ($\omega$) of the cylindrical surface section (110) of the chamber (100) vs. the cylindrical surface section (210) of the enclosure (200) by rotation of at least the portion of chamber (100) comprising the cylindrical surface section (110) of the chamber (100) and/or at least the portion of enclosure (200) comprising the cylindrical surface section (210) of the enclosure (200) about the common cylinder axis (350), so that, for a first predetermined relative angular position ($\omega 1$), the exit opening (120) at least partially overlaps with a first subset of the transmission openings (220-k), thereby routing the flow of fluid (300) towards the first subset of the fluid outlets (201-k) in fluid communication with the respective transmission openings (220-k), and for a second predetermined relative angular position ($\omega 2$), the exit opening (120) at least partially overlaps with a second subset of the transmission openings (220-k), thereby routing the flow of fluid (300) towards the second subset of the fluid outlets (201-k) in fluid communication with the respective transmission openings (220-k).

2. Device (1000) according to claims 1, wherein the cylindrical surface section (110) of the chamber (100) comprises a plurality of exit openings (120).

3. Device (1000) according to claim 1 or 2, wherein a plurality of exit openings (120) and/or the plurality of transmission openings (220-k) are arranged along an axial length of the chamber (100) or the enclosure (200), respectively, which is substantially parallel relative to the common cylinder axis (350).

4. Device (1000) according to any of the preceding claims, wherein a plurality of exit openings (120) and/or the plurality of transmission openings (220-k) are arranged along a circumference of the cylindrical surface sections (110, 210) of the chamber (100) or the enclosure (200), respectively, wherein the said circumference is substantially normal relative to the common cylinder axis (350).

5. Device (1000) according to any of the preceding claims, wherein the chamber (100) and the enclosure (200) are adapted to prevent the fluid (300) from passing through other than the at least partially overlapping exit opening(s) and/or transmission openings (220-k) of the cylindrical surface sections (110, 210) of the chamber (100) or the enclosure (200), respectively.

6. Device (1000) according any of the preceding claims, wherein at least one of the transmission openings (220-k) or one of the exit openings (120) has a cross-section shaped to overlap with a plurality of exit openings (120) or transmission openings (220-k), respectively, at a given relative angular position ($\omega_o$) of the cylindrical surface section (110) of the chamber (100) vs. the cylindrical surface section (210) of the enclosure (200).

7. Device (1000) according to any of the preceding claims, wherein the fluid outlets (201-k) comprise connectors and/or attached pipes or ducts.

8. Device (1000) according to any of the preceding claims, wherein the relative angular position ($\omega$) of the cylindrical surface section (110) of the chamber (100) vs. the cylindrical surface section (210) of the enclosure (200) is changed by rotation of the chamber (100) vs. the enclosure (200), such as, by a drive (150).

9. Device (1000) according to claim 8, wherein the drive is coupled to the chamber (100)

- at a point on an axis parallel to the common cylinder axis (350), or
- to a portion of its cylindrical surface section (110).

10. Device (1000) according to claims 8 or 9, wherein the drive (150) comprises a motor, such as, a stepper motor.

11. Device (1000) according to claims 8 to 10, wherein the drive is configured to receive control signals allowing to set a predetermined relative angular position ($\omega$) of the cylindrical surface section (110) of the chamber (100) vs. the cylindrical surface section (210) of the enclosure (200).

**12.** Device (1000) according to claim 11, wherein the control signals are received by an input receiving input from an output of a control device (500) programmed to perform a mapping between a desired flow of fluid (300) towards at least one of the fluid outlets (201-k) and a corresponding relative angular position ($\omega$) of the cylindrical surface section (110) of the chamber (100) vs. the cylindrical surface section (210) of the enclosure (200).

**13.** Device (1000) according to any of the preceding claims, the device (1000) comprising a sensor allowing to determine the relative angular position ($\omega$) of the cylindrical surface section (110) of the chamber (100) vs. the cylindrical surface section (210) of the enclosure (200).

**14.** Device (1000) according to any of the preceding claims, wherein the fluid inlet (101) is arranged:

- at a surface of the enclosure (200) that is not part of a cylindrical surface section (210) of the enclosure (200), such as, a cylinder end face (205) of the enclosure (200) or a cylindrical section of the enclosure (200) not adjacent to a cylindrical surface section (110) of the chamber (100); or
- at a cylindrical surface section (210) of the enclosure (200), and wherein at least one inlet opening (130) is arranged at the cylindrical surface section (110) of the chamber (100), so that, for at least one predetermined relative angular position ($\omega$) of the cylindrical surface section (110) of the chamber (100) vs. the cylindrical surface section (210) of the enclosure (200), the inlet opening (130) at least partially overlaps with the fluid inlet (101).

**15.** Device (1000) according to any of the preceding claims, wherein a seal (321), such as, a polymer lip seal, is provided along edges of the exit openings (120) and/or the transmission openings (220-k) to prevent fluid from flowing into a clearance space between the cylindrical surface section (110) of the chamber (100) and the cylindrical surface section (210) of the enclosure (200).

**16.** Device (1000) according to any of the preceding claims, wherein a seal, such as, a labyrinth seal, is provided along a circumference, which is substantially normal relative to the common cylinder axis (350), of the cylindrical surface sections (110, 210) of the chamber (100) or the enclosure (200) to prevent fluid flowing inside the clearance space between the cylindrical surface section (110) of the chamber (100) and the cylindrical surface section (210) of the enclosure (200) along an axial component of chamber (100) and the enclosure (200), and, in particular, between plural exit openings (120) and/or transmission openings (220-k).

**17.** Use of a device (1000) according to any of the preceding claims in an air-conditioning system, in particular, in a vehicle (600) air conditioning system or in a static space air-conditioning system, for distributing air flow between different regions of the vehicle (600) or the static space, respectively.

FIG. 1

FIG. 2

EP 4 613 515 A1

**FIG. 3**

FIG. 4

EP 4 613 515 A1

17

FIG. 5b

(A)

(B)

FIG. 6

FIG. 7

FIG. 8

FIG. 9

Europäisches
Patentamt

European
Patent Office

Office européen
des brevets

**EUROPEAN SEARCH REPORT**

**Application Number**

EP 24 16 1220

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 216 300 B1 (HANON SYSTEMS [KR]) 18 February 2021 (2021-02-18) * the whole document * ----- | 1-17 | INV. B60H1/00 B60H1/32 F16K11/00 |
| X | WO 2021/122949 A1 (HELLA GMBH & CO KGAA [DE]) 24 June 2021 (2021-06-24) * the whole document * ----- | 1-17 | |
| X | US 4 102 357 A (CHARLTON MARK) 25 July 1978 (1978-07-25) * the whole document * ----- | 1-17 | |
| A | GB 2 324 600 A (MC MICRO COMPACT CAR AG [CH]) 28 October 1998 (1998-10-28) * the whole document * ----- | 1-17 | |

TECHNICAL FIELDS
SEARCHED      (IPC)

B60H
B65D
F16K
F25B
B05B

The present search report has been drawn up for all claims

| Place of search | Date of completion of the search | Examiner |
|---|---|---|
| Munich | 20 September 2024 | Beckman, Tycho |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 1220

This annex lists the patent family members relating to the patent documents cited in  the above-mentioned European search report.
The members are as contained in the European Patent Office EDP file on
The European Patent Office is in no way liable for these particulars which are merely given for the purpose of information.

20-09-2024

| Patent document cited in search report | | Publication date | Patent family member(s) | | Publication date |
|---|---|---|---|---|---|
| KR 102216300 | B1 | 18-02-2021 | DE 102018106298 | A1 | 19-09-2019 |
| | | | KR 20190110032 | A | 27-09-2019 |
| WO 2021122949 | A1 | 24-06-2021 | NONE | | |
| US 4102357 | A | 25-07-1978 | DE 2647995 | A1 | 05-05-1977 |
| | | | FR 2328610 | A1 | 20-05-1977 |
| | | | GB 1547973 | A | 04-07-1979 |
| | | | US 4102357 | A | 25-07-1978 |
| GB 2324600 | A | 28-10-1998 | FR 2762552 | A1 | 30-10-1998 |
| | | | GB 2324600 | A | 28-10-1998 |
| | | | JP 2975590 | B2 | 10-11-1999 |
| | | | JP H10315747 | A | 02-12-1998 |

EPO FORM P0459

For more details about this annex : see Official Journal of the European Patent Office, No. 12/82